# EUROPEAN PATENT APPLICATION

(11) **EP 1 758 105 A1**
(43) Date of publication of application: **28.02.2007**
(21) Application number: 05734387.3
(22) Date of filing: 25.04.2005
(51) Int. Cl.: G11B 7/007, G11B 7/24, G11B 20/10

(54) **INFORMATION RECORDING MEDIUM**

(30) Priority: 26.04.2004 JP 2004129368
(71) Applicant: MATSUSHITA ELECTRIC INDUSTRIAL CO., LTD., Kadoma-shi, Osaka 571-8501 (JP)
(72) Inventor: ISHIBASHI, H. Matsushita Electric Ind. Co., Ltd., 1-3-7 Shiromi Chuo-ku Osaka 540-6319 (JP); MINAMINO, J. Matsushita Electric Ind. Co., Ltd., 1-3-7 Shiromi Chuo-ku Osaka 540-6319 (JP); NAKAO, M. Matsushita Electric Ind. Co., Ltd., 1-3-7 Shiromi Chuo-ku Osaka 540-6319 (JP)
(74) Representative: Grünecker, Kinkeldey, Stockmair & Schwanhäusser Anwaltssozietät
(86) International application number: PCT/JP2005/007796
(87) International publication number: WO 2005/104106

(57) **Abstract**

An information storage medium 100 according to the present invention includes a track 10 that wobbles in a predetermined period and a plurality of pre-pits 21 and 22, which are arranged adjacent to the track. The track has a plurality of frame units 11 and 12. At least one of the pre-pits 21 and 22 is allocated to each of the frame units 11 and 12. Each of the frame units 11 and 12 has a first wobble shape 111, of which the falling portion is sloped more steeply than its rising portion, and/or a second wobble shape 112, of which the rising portion is sloped more steeply than its falling portion. The first wobble shape 111 represents a first type of information and the second wobble shape 112 represents a second type of information. The first and second types of information are different from each other.

## Description

### TECHNICAL FIELD

The present invention relates to an information storage medium and to an apparatus for reading and/or writing data from/on the information storage medium. An information storage medium according to the present invention may be an optical disk medium on which data can be either written only once or rewritten, and has a wobbling track.

### BACKGROUND ART

Among currently available write-once optical disk media and rewritable optical disk media, there are optical disk media that adopt a method of specifying an address using land pre-pits (LPPs). Examples of such optical disk media include DVD-R disk media. An optical disk medium of that type is disclosed in Patent Document No. 1, for example.

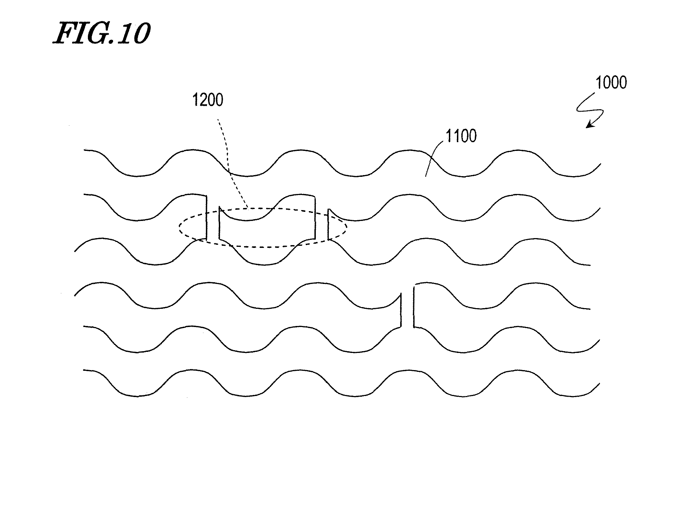

FIG. **10** is a plan view illustrating a portion of the storage layer of an optical disk medium 1000 with LPPs on a larger scale.

The track groove **1100** left on the storage layer of the optical disk medium **1000** wobbles just like a sine wave in a constant period. An LPP **1200** is made at a predetermined location on an area with no track groove **1100.** One bit of information can be stored in the storage layer of the optical disk medium **1000** by leaving or not leaving that LPP 1200.

If the LPP **1200** represents address information, for example, no overhead will be caused in a user data storage area on the track groove **1100** and a sufficient capacity can be reserved to store the user data.

User data is written along the track groove **1100** but the LPP **1200** is located off the track groove **1100.** That is why user data is rarely written on the LPP **1200** and it is relatively easy to read the user data and the type of information represented by the LPP **1200** separately.

Data is usually read by using a photodetector that is divided in the track tangential direction. Based on the output signals of those areas of the divided photodetector, a sum signal and a differential signal are generated. An RF signal representing data is generated based on the sum signal. A signal representing the wobbling shape of the track groove **1100** and the state of the LPP **1200** is generated based on the differential signal. The amplitude of a signal representing the LPP 1200 (which will be referred to herein as an "LPP signal") is usually greater than that of the signal representing the wobbling shape of the track groove 1100 (which will be referred to herein as a "wobble signal"). Thus, the LPP signal and the wobble signal can be separated from each other by utilizing the difference in amplitude between these signals. For example, if the differential signal is digitized by using a threshold value (or w window) that is greater than the amplitude of the wobble signal but smaller than the amplitude of the LPP signal, the LPP signal can be obtained as a pulse signal based on the differential signal.
Patent Document No. 1: Japanese Patent Application Laid-Open Publication No. 9-326138

### DISCLOSURE OF INVENTION

### PROBLEMS TO BE SOLVED BY THE INVENTION

However, since the frequency of the LPP signal is much higher than that of the wobble signal, the information represented by the LPP 1200 could not be read accurately in a situation where the signal to noise ratio (SNR) is poor. Examples of such situations include a situation where a read or write operation is being carried out at a high rate and a situation where the optical disk medium has two or more storage layers. The "high rate" refers to a linear velocity that is higher than the standard rate according to that optical disk medium's specifications. For example, the "high rate" may be a rate of 216 Mbps or more, which is eight times as high as the standard rate of 27 Mbps according to the DVD standard. While a read or write operation is being carried out at such a high rate, the amplitude of the LPP signal itself decreases. Also, during a write operation, a laser modulated signal is superposed as noise on the LPP signal. Furthermore, if the optical disk medium has two storage layers, the SNR decreases by about 6 dB during a read operation. Besides, an off-track phenomenon occurs during a write operation. As a result, even when a read operation is attempted after data has been overwritten on the LPP 1200, it is difficult to detect the LPP signal accurately.

In order to overcome the problems described above, an object of the present invention is to provide an information storage medium, from which information such as addresses can be read accurately even in a situation where the SNR is poor, and also provide an apparatus for reading and/or writing data from/on such an information storage medium.

### MEANS FOR SOLVING THE PROBLEMS

An information storage medium according to the present invention includes a track that wobbles in a predetermined period and a plurality of pre-pits, which are arranged adjacent to the track. The track has a plurality of frame units. At least one of the pre-pits is allocated to each of the frame units. Each of the frame units has a first wobble shape, of which the falling portion is sloped more steeply than its rising portion, and/or a second wobble shape, of which the rising portion is sloped more steeply than its falling portion. The first wobble shape represents a first type of information and the second wobble shape represents a second type of information. The first and second types of information are different from each other.

In one preferred embodiment, each of the frame units has either the first wobble shape or the second wobble shape. The at least one pre-pit, allocated to a particular one of the frame units, represents a third type of information that is associated with the first or second type of information represented by the shape of the particular frame unit.

In this particular preferred embodiment, the third type of information and the first or second type of information, represented by the shape of the particular frame unit, have the same contents.

In another preferred embodiment, the at least one pre-pit, allocated to each of the frame units, is adjacent to a prescribed position of its associated frame unit.

In still another preferred embodiment, each of the first and second wobble shapes is a unit shape representing one bit of information, and each of the frame units has the same number of portions with the unit shape as any of the other frame units.

In yet another preferred embodiment, the frame units are grouped into a plurality of word units, each of which includes at least two of the frame units, and the at least one pre-pit, allocated to the first one of the frame units in each of the word units, provides information showing the top of the word unit.

An apparatus according to the present invention is designed to read and/or write data from/on the information storage medium described above. The apparatus includes: a first signal output section for outputting a first signal, which contains the first and second types of information included in a signal representing a portion of a laser beam that has been radiated toward, and then reflected from, the information storage medium; a second signal output section for outputting a second signal representing a wobbling frequency of the track, which is included in the signal representing the reflected laser beam; and a third signal output section for outputting a third signal containing the third type of information represented by the pre-pit, which is included in the signal representing the reflected laser beam.

In one preferred embodiment, the apparatus further includes an integrating section for detecting the values of the first signal at predetermined intervals and finding the integral of those values, and a first detecting section for detecting the first and second types of information based on the integral.

In this particular preferred embodiment, each of the first and second wobble shapes is a unit shape representing one bit of information. Each of the frame units has the same number of portions with the unit shape as any of the other frame units. The apparatus further includes a counter section for counting up to a predetermined number of times. The predetermined number of times corresponds with the number of the portions with the unit shape that are included in each of the frame units. The integrating section resets the integral every time the counter section counts to the predetermined number.

In a specific preferred embodiment, the frame units are grouped into a plurality of word units, each of which includes at least two of the frame units. The third type of information that is represented by the at least one pre-pit, allocated to the first one of the frame units in each of the word units, shows the top of the word unit. The apparatus further includes a second detecting section for detecting the third type of information, showing the top of the word unit, based on the third signal. When the second detecting section detects the third type of information showing the top of the word unit, the counter section resets its count to an initial value.

In another preferred embodiment, the frame units are grouped into a plurality of word units, each of which includes at least two of the frame units. The word units are grouped into a plurality of block units, each of which includes at least two of the word units. At a position on the track, corresponding to the top of each said block unit, identification information, showing the top of the block unit, has been recorded. The apparatus further includes a third detecting section for detecting the identification information based on a read signal representing the laser beam that has been reflected from the information storage medium. When the third detecting section detects the identification information, the counter section resets its count to an initial value.

In still another preferred embodiment, the frame units are grouped into a plurality of word units, each of which includes at least two of the frame units. The third type of information that is represented by the at least one pre-pit, allocated to the first one of the frame units in each of the word units, shows the top of the word unit. The word units are grouped into a plurality of block units, each of which includes at least two of the word units. At a position on the track corresponding to the top of each said block unit, identification information, showing the top of the block unit, has been recorded. The apparatus further includes: a second detecting section for detecting the third type of information, showing the top of the word unit, based on the third signal; and a third detecting section for detecting the identification information based on a read signal representing the laser beam that has been reflected from the information storage medium. Either when the second detecting section detects the third type of information showing the top of the word unit or when the third detecting section detects the identification information, the counter section resets its count to an initial value.

In yet another preferred embodiment, each of the frame units has either the first wobble shape or the second wobble shape. The third type of information, represented by the at least one pre-pit allocated to a particular one of the frame units, and the first or second type of information, represented by the shape of the particular frame unit, have the same contents. The apparatus further includes a selector section for selecting the first and second types of information from the first, second and third types of information if the laser beam is scanning the track at a first velocity but selecting the third type of information from the first, second and third types of information if the laser beam is scanning the track at a second velocity. The first velocity is higher than the second velocity.

In yet another preferred embodiment, each of the frame units has either the first wobble shape or the second wobble shape. The third type of information, represented by the at least one pre-pit allocated to a particular one of the frame units, and the first or second type of information, represented by the shape of the particular frame unit, have the same contents. The apparatus further includes a selector section for selecting the first and second types of information from the first, second and third types of information while performing a write operation but selecting the third type of information from the first, second and third types of information while performing a read operation.

In yet another preferred embodiment, the apparatus further includes a selector section, which compares a first error rate in a situation where the first and second types of information are detected based on the first signal with a second error rate in a situation where the third type of information is detected based on the third signal and which selects the first and second types of information from the first, second and third types of information if the first error rate is lower than the second error rate but selects the third type of information from the first, second and third types of information if the first error rate is higher than the second error rate.

A method according to the present invention is designed to read and/or write data from/on the information storage medium described above. The method includes the steps of: (i) outputting a first signal, which contains the first and second types of information included in a signal representing a portion of a laser beam that has been radiated toward, and then reflected from, the information storage medium; (ii) outputting a second signal representing a wobbling frequency of the track, which is included in the signal representing the reflected laser beam; and (iii) outputting a third signal containing the third type of information represented by the pre-pit, which is included in the signal representing the reflected laser beam.

Another information storage medium according to the present invention includes a plurality of storage layers. Each of the storage layers includes a track that wobbles in a predetermined period and a plurality of pre-pits, which are arranged adjacent to the track. The track has a plurality of frame units. At least one of the pre-pits is allocated to each of the frame units. Each of the frame units has a first wobble shape, of which the falling portion is sloped more steeply than its rising portion, and/or a second wobble shape, of which the rising portion is sloped more steeply than its falling portion. The first wobble shape represents a first type of information and the second wobble shape represents a second type of information. And the first and second types of information are different from each other.

### EFFECTS OF THE INVENTION

According to the present invention, the track has a first wobble shape representing a first type of information and a second wobble shape representing a second type of information. And by combining these first and second wobble shapes with each other, an address or any other type of information can be provided. Since there is no need to store address information in a user data area on the track, a sufficient storage capacity can be reserved to store user data. Also, by adopting an arrangement in which the wobble shape of a particular frame unit and the pre-pit allocated to that particular frame unit represent mutually associated types of information (e.g., the same information), even if one failed to read the information represented by the pre-pit accurately, that information can still be read accurately by reading the information represented by the wobble shape of the frame unit.

Also, according to the present invention, by integrating the values of a signal representing the first and second types of information (i.e., a second harmonic signal) with respect to the information represented by the pre-pit as the origin, the information represented by the wobble shape can be detected. By finding the integral of the values of the second harmonic signal, high-frequency noise components can be removed and the address and other types of information represented by the wobble shape can be read accurately. Meanwhile, the LPP signal has high frequencies, and is not affected by low-frequency noise components easily. That is why by selectively using either the second harmonic signal or the LPP signal depending on the type of the noise, the address and other types of information can be read even more accurately. Furthermore, the second harmonic signal and the LPP signal may also be used selectively to make full use of their advantages. For example, when a read/write operation is carried out at a low rate, the information may be detected by using the LPP signal to ensure compatibility with conventional information storage media. On the other hand, when a read/write operation is carried out at a high rate, the information may be detected by using the second harmonic signal.

### BRIEF DESCRIPTION OF DRAWINGS

FIG. **1A** is a plan view illustrating, on a larger scale, a portion of the storage layer of an optical disk medium according to a first preferred embodiment of the present invention.
FIG. **1B** is a perspective view illustrating a portion of the optical disk medium of the first preferred embodiment of the present invention three-dimensionally.
FIG. **2A** shows a table representing a frame unit according to the first preferred embodiment of the present invention.
FIG. **2B** shows a table representing a frame unit according to the first preferred embodiment of the present invention.
FIG. **2C** shows a table representing a frame unit according to the first preferred embodiment of the present invention.
FIG. **3** shows a table representing a word unit according to the first preferred embodiment of the present invention.
FIG. **4** shows a table representing a block unit according to the first preferred embodiment of the present invention.
FIG. **5** is a block diagram showing an optical disk drive according to a second preferred embodiment of the present invention.
FIG. **6** is a timing diagram showing how the optical disk drive operates according to the second preferred embodiment of the present invention.
FIG. **7** is a block diagram showing an optical disk drive according to a third preferred embodiment of the present invention.
FIG. **8** is a block diagram showing an optical disk drive according to a fourth preferred embodiment of the present invention.
FIG. **9** is a block diagram showing an optical disk drive according to a fifth preferred embodiment of the present invention.
FIG. **10** is a plan view illustrating a portion of the storage layer of a conventional optical disk medium on a larger scale.

### DESCRIPTION OF REFERENCE NUMERALS

- **10**: track
- **11, 12**: frame unit
- **21, 22**: land pre-pit
- **100**: information storage medium
- **101**: storage layer
- **111**: first wobble shape
- **112**: second wobble shape

### BEST MODE FOR CARRYING OUT THE INVENTION

Hereinafter, preferred embodiments of the present invention will be described with reference to the accompanying drawings.

### EMBODIMENT 1

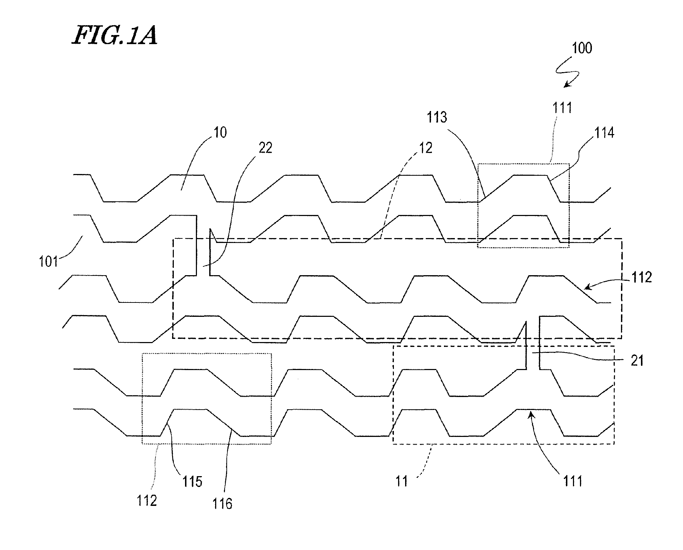

First, an information storage medium according to a first specific preferred embodiment of the present invention will be described with reference to FIG. **1A,** which is a plan view illustrating, on a larger scale, a portion of the storage layer **101** of an information storage medium **100** according to this preferred embodiment. The information storage medium **100** may be an optical disk medium, for example.

The storage layer **101** includes a track groove (which will be simply referred to herein as a "track") **10,** which is arranged spirally around the center of the optical disk medium **100.** As viewed from the direction from which the laser beam comes, the track **10** looks a recess (or a groove) on the storage layer **101.** Alternatively, the track **10** may also be a raised portion. The track **10** wobbles in a predetermined fundamental period in the radial direction of the optical disk medium **100.**

The wobble shape of a portion of the track **10** corresponding to one wobble period is a sawtooth wobble (STW) shape. As the STW shape, the track **10** has a first wobble shape **111** and a second wobble shape **112.**

A wobbled shape portion of the track **10,** which is bent from the inner edge of the optical disk medium **100** toward the outer edge thereof in the direction in which the beam spot moves on the track **10** (i.e., a direction that is parallel to the tangential direction on the center of the track **10),** will be referred to herein as a "rising portion". On the other hand, another wobbled shape portion of the track **10,** which is bent from the outer edge of the optical disk medium **100** toward the inner edge thereof, will be referred to herein as a "falling portion". The first wobble shape **111** is a shape of which the falling portion **114** is sloped more steeply than the rising portion **113** thereof. Meanwhile, the second wobble shape **112** is a shape of which the rising portion **115** is sloped more steeply than the falling portion **116** thereof. Each of the first and second wobble shapes **111** and **112** is a unit shape representing one bit of information. The first wobble shape **111** represents a first type of information and the second wobble shape **112** represents a second type of information. And the first and second types of information are different from each other. For example, the first type of information may be "zero" of the one bit of information and the second type of information may be "one" of the one bit of information. The first and second types of information may represent the auxiliary information (such as address information) that is stored on the optical disk medium **100.**

A signal representing the first wobble shape **111** is generated based on the light that has been reflected from the storage layer **101** and will have a waveform, of which the falling edge is steeper than the rising edge thereof. On the other hand, another signal representing the second wobble shape **112** is also generated based on the reflected light and has a waveform, of which the rising edge is steeper than the falling edge thereof. By sensing such a difference in waveform between the signals representing the wobble shapes **111** and **112,** the first and second types of information "0" and "1" can be identified from each other.

In reading and writing data from/on the optical disk medium **100,** a laser beam spot is formed on the storage layer **101** of the rotating optical disk medium **100** and the position of the beam spot is controlled highly precisely so as to follow substantially the center of the track **10.** A control operation of this type is called a "tracking control".

The light that has been reflected from the optical disk medium **100** is detected by a photodetector, which is provided for the optical pickup of an optical disk drive. And a tracking control operation is carried out based on the output signal of the photodetector. During the tracking control, the beam spot follows substantially the center of the track **10.**

The photodetector outputs a differential signal, which includes components representing a variation in intensity corresponding to the STW shape of the track **10.** The degree of steepness with which the track **10** wobbles in the radial direction of the optical disk medium **100** (i.e., perpendicularly to the tangential direction on the center of the track **10)** in the first wobble shape **111** is different from that in the second wobble shape **112.** For that reason, the difference in steepness between the rising edges or between the falling edges of signal waveforms corresponding to the STW shape reflects the STW shape.

Specifically, the first wobble shape **111** changes relatively gently from the inner edge of the optical disk medium **100** toward the outer edge thereof, and then changes relatively steeply from the outer edge of the optical disk medium **100** toward the inner edge thereof. That is why in a signal corresponding to the first wobble shape **111,** the falling edge is steeper than the rising edge.

On the other hand, the second wobble shape **112** changes relatively steeply from the inner edge of the optical disk medium **100** toward the outer edge thereof, and then changes relatively gently from the outer edge of the optical disk medium 100 toward the inner edge thereof. That is why in a signal corresponding to the second wobble shape **112,** the rising edge is steeper than the falling edge.

Next, frame units will be described.

The track **10** includes a plurality of frame units **11** and **12.** Each of the frame units **11** has a number of first wobble shape portions **111.** On the other hand, each of the frame units **12** has a number of second wobble shape portions **112.** Each of the first and second wobble shapes **111** and **112** is a unit shape representing one bit of information. And each of the frame units **11** and **12** has the same number of portions with the unit shape as any of the other frame units.

The storage layer **101** includes a plurality of land pre-pits (LPPs) **21** and **22** at predetermined positions where no track **10** is present (i.e., in the gaps between adjacent portions of the spiral track **10).** The LPPs **21** and **22** are arranged adjacent to the track **10.** At least one LPP **21** or **22** is allocated to each of the frame units **11** and **12.** More specifically, the LPP **21** is allocated to the frame unit **11** adjacent to a predetermined position thereof, while the LPP **22** is allocated to the frame unit **12** adjacent to a predetermined position thereof. The LPP **21** represents a piece of information corresponding to the first type of information represented by the shape of the frame unit **11** (i.e., the first wobble shape **111).** And the LPP **22** represents a piece of information corresponding to the second type of information represented by the shape of the frame unit **12** (i.e., the second wobble shape **112).** For example, the LPP **21** and the first wobble shape **111** may represent the same information (e.g., the first type of information), and the LPP **22** and the second wobble shape **112** may represent the same information (e.g., the second type of information).

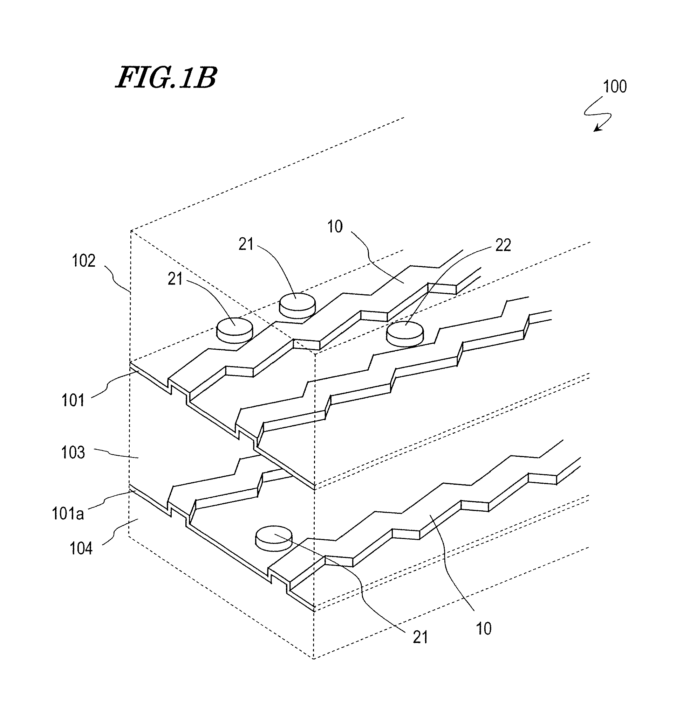

Next, the optical disk medium **100** will be described in further detail with reference to FIG. **1B,** which is a perspective view illustrating a portion of the optical disk medium **100** three-dimensionally. The optical disk medium 100 may include either only one layer or two or more layers. The optical disk medium **100** illustrated in FIG. **1B** includes two storage layers **101** and **101a.** The elements of the storage layer **101a** are the same as the counterparts of the storage layer **101,** and the description thereof will be omitted herein.

The optical disk medium **100** includes a substrate **102.** The storage layer **101** is arranged on the storage side of the substrate **102.** As used herein, the "storage side" is the side of the optical disk medium **100** that faces the optical pickup when the optical disk medium **100** is loaded in the optical disk drive. A transparent resin layer **103** is arranged on the opposite side of the storage layer **101** (i.e., not on the substrate side). And the storage layer **101a** is arranged on the opposite side of the transparent resin layer **103,** on which the storage layer **101** is not present. The transparent resin layer **103** provides a predetermined gap of about 30 µm to about 60 µm between the storage layers **101** and **101a.** A protective layer **104** is arranged on the opposite side of the storage layer **101a** so as not to contact with the transparent resin layer **103.** The protective layer **104** protects the storage layers **101** and **101a** from dirt, scratches and so on.

These elements may have the following sizes and dimensions. For example, the gap between the adjacent grooves of the track **10** may be from about 0.7 µm to about 0.8 µm, the track 10 may have a groove width of about 0.2 µm to about 0.5 µm, and the track 10 may have a level difference (i.e., a height or a depth) of λ/16 to λ/8 (where λ is the wavelength) when it is converted into a fraction of the wavelength. These dimensions are taken in a situation where the beam spot has a diameter of about 1 µm. For example, if a laser beam with a wavelength of 650 nm and an NA of 0.65 is used, then the beam spot will have a diameter of about 1 µm. The gap between the storage layers **101** and **101a** may be about 30 µm to about 60 µm. The LPPs **21** and **22,** illustrated as circular ones in FIG. 1B, may have a size of about 0.5 µm to about 1.0 µm as measured in the tangential direction of the track **10.** One wobble period of the track 10 may have a length of about 15 µm to about 30 µm. In that case, the frequency of a signal representing the wobble shape will be about 1/30 of that of a signal representing the LPP. It should be noted that the sizes and dimensions of these elements are just examples. As the beam spot of the laser beam used decreases, the sizes of these elements may decrease accordingly.

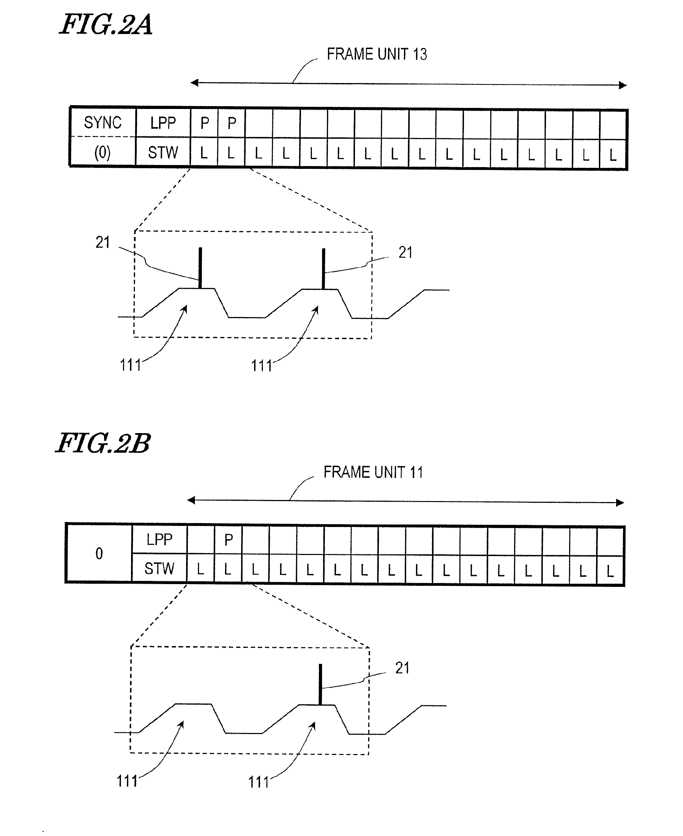

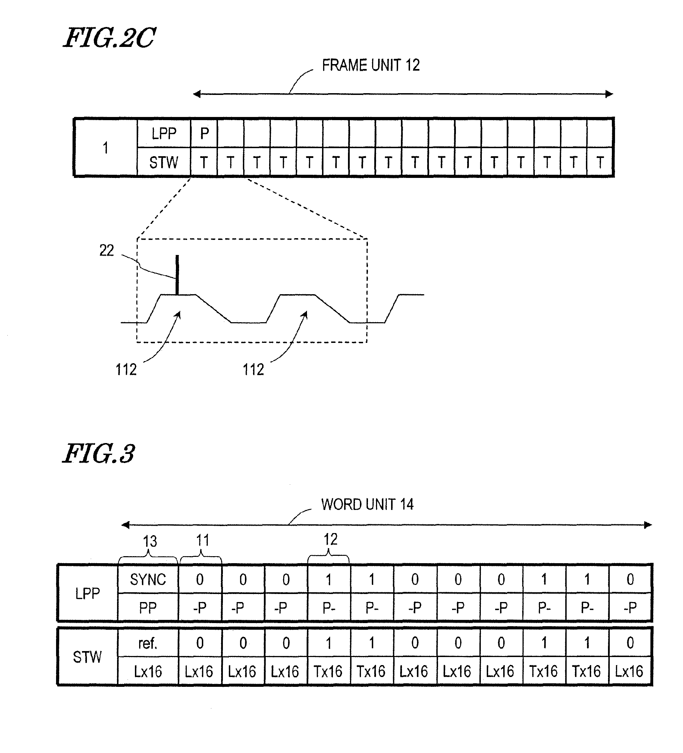

Next, the frame unit will be described in further detail with reference to FIGS. **2A, 2B** and **2C.**

FIGS. **2A, 2B** and **2C** show tables representing three types of frame units **11, 12** and **13.** The reference sign **L** denotes the first wobble shape **111** while the reference sign **T** denotes the second wobble shape **112.**

To each of these frame units **11, 12** and **13,** allocated are multiple bits of information (i.e., zeros and/or ones), each of which is represented by either the first wobble shape **111** or the second wobble shape **112.** Another piece of information **SYNC** is further allocated to the frame unit **13.** The information **SYNC** shows the top of a word unit (see FIG. 3) to be described later. Specifically, multiple "0" bits are allocated to the frame unit **11** and multiple "1" bits are allocated to the frame unit **12.** Each of the frame units **11, 12** and **13** has the same number of portions, each having the unit shape representing one bit of information (i.e., either the first wobble shape **111** or the second wobble shape **112),** as any of the other frame units **11, 12** and **13.** More specifically, in the example illustrated in FIGS. **2A** through **2C,** each of the frame units **11, 12** and **13** has sixteen portions with the unit shape.

The LPP **21** or **22** is allocated to each of the frame units **11, 12** and **13** so that the frame units **11, 12** and **13** can be identified from each other by the LPPs **21** and **22.**

The LPPs **21** and **22** are arranged adjacent to at least one of the two unit shapes at the top of each frame unit **11, 12** or **13.** In FIGS. **2A** through **2C,** the reference sign **P** shows the position where the LPP **21** or **22** is arranged in the sixteen unit shapes. Specifically, the LPP **21** is not allocated to the first one of the two unit shapes at the top of the frame unit **11** but is allocated to the second unit shape as counted from the top. Such a pattern of allocating the LPP **21** to the frame unit **11** represents one bit of information "0". On the other hand, the LPP **22** is allocated to the first one of the two unit shapes at the top of the frame unit **12** but is not allocated to the second unit shape as counted from the top. Such a pattern of allocating the LPP **22** to the frame unit **12** represents one bit of information "1". And the LPP **21** is allocated to both of the two unit shapes at the top of the frame unit **13.** Such a pattern of allocating the LPPs **21** to the frame unit **13** represents the information **SYNC.**

If one of the top two unit shapes, to which neither the LPP **21** nor the LPP **22** is allocated, is represented by "-", the one bit of information "0" can be denoted as "-P" by biphase notation. In the same way, the one bit of information "1" can be denoted as "P-" and the information **SYNC** can be denoted as "PP".

The information represented by the first wobble shape **111** of the frame unit **11** and the information represented by the pattern of allocating the LPP **21** to the frame unit **11** have the same contents (i.e., one bit of information "0"). Likewise, the information represented by the second wobble shape **112** of the frame unit **12** and the information represented by the pattern of allocating the LPP 22 to the frame unit **12** have the same contents (i.e., one bit of information "1").

The LPPs **21** and **22** are all arranged around the top of the frame units, whereas each of the first and second wobble shapes **111** and **112** is repeatedly formed continuously through sixteen wobble periods. Specifically, in the frame unit **11,** the first wobble shape **111** (identified by the reference sign **L)** is repeatedly formed sixteen times in a row and each of the sixteen portions with the first wobble shape **111** represents one bit of information "0". On the other hand, in the frame unit **12,** the second wobble shape **112** (identified by the reference sign **T)** is repeatedly formed sixteen times in a row and each of the sixteen portions with the second wobble shape 112 represents one bit of information "1".

If the values of signals corresponding to the first and second wobble shapes **111** and **112** (i.e., second harmonic signals) are detected sixteen times in a predetermined period and integrated together, the information represented by the first and second wobble shapes **111** and **112** can be detected. By finding the integral of those sixteen values of the second harmonic signal, the high-frequency noise level can be reduced to approximately one-fourth (to about -12 dB) compared to the situation where those values are not integrated together. As a result, even when the SNR is poor, the chances of detecting the information accurately still increase. Meanwhile, since the LPPs **21** and **22** are concentrated around the top of the frame units, the signals corresponding to the LPPs **21** and **22** (i.e., LPP signals) have high frequencies. That is why the LPP signals are not affected by low-frequency noise components easily. Consequently, by selectively using either the second harmonic signal or the LPP signal according to the type of the noise generated, addresses and other types of information can be read more accurately. Such an operation of detecting the information included in the second harmonic and LPP signals will be described in further detail later for the second and other preferred embodiments of the present invention.

By integrating the sixteen values of the second harmonic signal as described above, the SNR can be improved by 12 dB when the first and second types of information are detected. In other words, the second harmonic signal can be detected even if its amplitude is one-fourth (-12dB) of that of the carrier. Thus, the slope steepness of the rising and falling portions of the wobble shape can be determined according to the conditions. Even if the waveform of the signal representing the wobble frequency of the track 10 is distorted by about -12 dB, detection of the wobble frequency of the track 10 will not be affected seriously. This is very advantageous in order to establish compatibility between optical disk media with mutually different formats. An optical disk drive that has no function of detecting the STW shape but just detects the address information only by the LPPs will detect the wobble frequency by ignoring some distortion of the signal waveform representing the wobble frequency. That is why even if the optical disk medium 100 is loaded into such an optical disk drive, the optical disk drive detects the wobble frequency without paying attention to some distortion of the signal waveform representing the wobble frequency (i.e., distortion resulting from the STW shape). Thus, the optical disk drive can perform a read/write operation on the optical disk medium 100 just like on any other optical disk medium.

On the other hand, even if an optical disk drive that detects address information by both the LPPs and the STW shape (as will be described later for the second and other preferred embodiments of the present invention) has failed to detect the address information by the LPPs (or the STW shape), the optical disk drive can still detect the address information by the STW shape (or the LPPs). As a result, the address information can be detected with more reliability.

It should be noted that the wobble shape of the frame unit **13** to which the information **SYNC** is allocated does not correspond to "PP". In this preferred embodiment, the frame unit 13 has the first wobble shape **111** representing one bit of information "0" as a reference.

Next, the word unit will be described with reference to FIG. **3.** A number of frame units **11, 12** and **13** included in the track **10** are grouped into a plurality of word units **14,** each including at least two of the frame units. FIG. **3** shows a table representing a word unit **14.** The word unit **14** includes twelve frame units **11, 12** and **13.** That is to say, each single word unit **14** has 12 bits of information. At the top of the word unit **14,** arranged is the frame unit **13.** The LPP **21** allocated to the frame unit **13** represents the information **SYNC** showing the top of the word unit **14.**

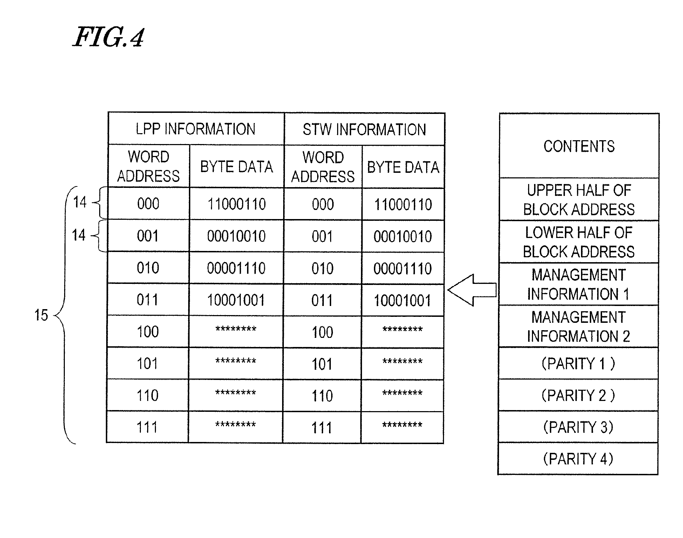

Next, the block unit will be described with reference to FIG. **4.** A number of word units **14** are grouped into a plurality of block units **15,** each including at least two of the word units **14.** FIG. **4** shows a table representing a block unit **15.** The block unit **15** includes eight word units **14.** The eleven bits of information, represented by eleven frame units except the frame unit representing SYNC, is divided into three-bit word address data and eight-bit byte data. Each bit data of the eight word units **14** includes the address information and management information of the block unit 15 and their parity information.

At a position on the track **10** corresponding to the top of each block unit **15,** identification information showing the top of that block unit **15** has been recorded.

The block unit **15** described above corresponds to one error correction code (ECC) block unit of the user data to be written on the track **10.**

### EMBODIMENT 2

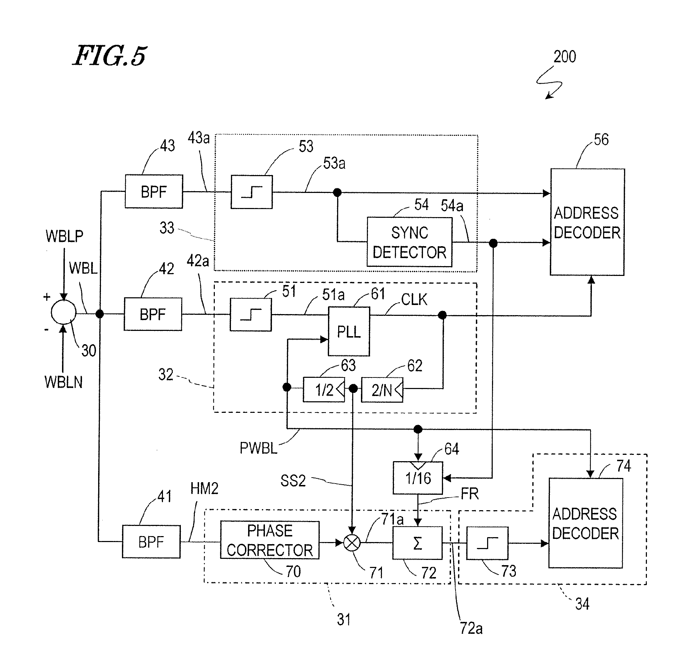

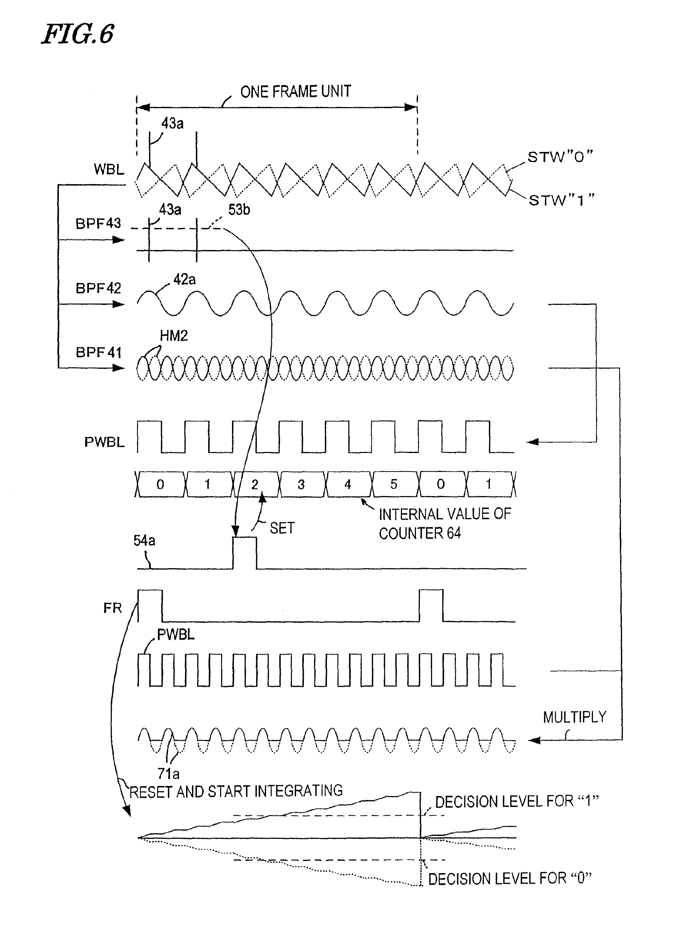

Hereinafter, a preferred embodiment of an optical disk drive according to the present invention will be described with reference to FIGS. **5** and **6.** FIG. **5** is a block diagram showing an optical disk drive 200 according to a second preferred embodiment of the present invention. FIG. **6** is a timing diagram showing how the optical disk drive **200** operates. The optical disk drive **200** is an apparatus for reading and/or writing data from/on the optical disk medium 100.

The optical disk drive **200** includes an optical pickup (not shown) that is also included in any known optical disk drive. A laser beam that has been radiated from a semiconductor laser in this optical pickup is condensed by an objective lens onto the storage layer **101** of the optical disk medium **100** (see FIG. **1A),** thereby forming a beam spot on the storage layer **101.** The beam spot follows the track **10** while being subjected to a tracking control and focus control carried out by the optical disk drive **200.**

The laser beam that has been incident on the storage layer **101** is reflected from the storage layer **101** and then detected by a photodetector in the optical pickup. The photodetector is divided into a number of photosensitive areas in the tangential direction of the track **10.** Signals **WBLP** and **WBLN** are output from the photosensitive areas. The optical disk drive **200** includes a differential amplifier **30,** which generates a differential signal (wobble signal) **WBL** based on the signals **WBLP** and **WBLN.** This wobble signal **WBL** includes a fundamental wave signal showing the fundamental frequency of the wobbled track **10,** a second harmonic signal providing information represented by the STW shape on the storage layer **101** and an LPP signal providing information represented by the LPP. Looking at the axis of frequencies, it can be seen that the second harmonic signal has a distributed spectrum in a relatively low frequency range while the LPP signal has a concentrated spectrum in a relatively high frequency range. For example, if the optical disk medium **100** is being driven at a velocity corresponding to the standard rate according to the DVD standard, the second harmonic signal has a frequency of about 200 kHz to about 2 MHz and the LPP signal has a frequency of about 8 MHz to about 16 MHz.

The optical disk drive **200** includes first, second and third signal output sections **41, 42** and **43.** The first signal output section **41** outputs the second harmonic signal **HM2** that provides information represented by the STW shape and that is included in the wobble signal **WBL.** The second signal output section **42** outputs the fundamental wave signal **42a** that shows the fundamental frequency of the wobbled track 10 and that is also included in the wobble signal **WBL.** And the third signal output section **43** outputs the LPP signal **43a** that provides information represented by the LPP and that is also included in the wobble signal **WBL.**

The first signal output section **41** is a bandpass filter (BPF) that receives the wobble signal **WBL** and passes at least the second harmonic signal **HM2** included in the wobble signal **WBL.** The second signal output section **42** is a BPF that receives the wobble signal **WBL** and passes at least the fundamental wave signal **42a.** And the third signal output section **43** is a BPF that receives the wobble signal **WBL** and passes at least the LPP signal **43a.** By using these BPFs, the wobble signal **WBL** can be separated into the second harmonic signal **HM2** that has a spectrum in a relatively low frequency range and the LPP signal **43a** that has a spectrum in a relatively high frequency range.

That is to say, the second harmonic signal **HM2,** the fundamental wave signal **42a** and the LPP signal **43a** are extracted from the wobble signal **WBL** by the BPFs **41, 42** and **43,** respectively.

It should be noted that none of the BPFs **41, 42** and **43** has to be implemented as a special filter circuit as long as a circuit functioning as a BPF can be used eventually. For example, since the LPP signal **43a** has a relatively high frequency, the passage of high frequency components is limited automatically depending on the frequency characteristic of the circuit even without providing a low pass filter for that purpose. Also, as the frequencies of the LPP signal **43a** are relatively high, the BPF **43** can also be realized just by adding a high-pass filter to filter out waveform variations in a low frequency range to the actual circuit.

Furthermore, a so-called heterodyne detector, made up of a multiplier **71** and an integrator **72** to be described later, virtually forms another bandpass filter. That is why the signal processing performed by the BPF **41** may be regarded as a sort of preprocessing before the signal processing is carried out by the heterodyne detector. Alternatively, the multiplier **71** and the integrator **72** may have the function of the BPF **41.**

The optical disk drive **200** further includes a detecting section 33 for digitizing the LPP signal **43a** and detecting the information **SYNC** that shows the top of a word unit and an address decoder **56** for generating an address signal. The detecting section **33** includes a comparator **53** for digitizing the LPP signal **43a** that has been extracted by the BPF **43** and a SYNC detector **54** for detecting the information **SYNC.** More specifically, the comparator **53** digitizes the LPP signal **43a** by reference to a threshold value **53b** (see FIG. **6**), thereby generating a digitized signal **53a.** Then, the comparator **53** outputs the digitized signal **53a** to the address decoder 56 and the SYNC detector **54.** The SYNC detector **54** detects the information **SYNC** from the digitized signal **53a** and outputs a signal **54a** representing the information **SYNC** to the address decoder **56.**

The optical disk drive **200** further includes a sync signal generating section **32** for generating a sync signal **CLK.** The sync signal generating section **32** includes a comparator **51** for digitizing the fundamental wave signal **42a,** a phase-locked loop (PLL) **61** for generating the sync signal **CLK,** and sequential frequency dividers (or counters) **62** and **63.** The comparator **51** outputs a digitized signal **51a,** generated by digitizing the fundamental wave signal **42a,** to the PLL **61.** In response, the PLL **61** generates the sync signal **CLK** based on the digitized signal **51a.** The sync signal **CLK** is subjected to an N/2 frequency division and a 2x frequency division by the sequential frequency dividers **62** and **63,** respectively. And a synchronous digitized signal **PWBL** is output from the sequential frequency divider **63** and fed back to the phase comparator (not shown) of the PLL **61.** The address decoder 56 operates in response to the sync signal **CLK.**

The BPF **41** extracts the second harmonic signal **HM2** from the wobble signal **WBL.** The difference between the first and second wobble shapes **111** and **112** is sensed as the inversion of the polarity of the second harmonic signal **HM2.** For example, the second harmonic signal **HM2** corresponding to the first wobble shape **111** may be represented by the solid waveform shown in FIG. 6 and the second harmonic signal **HM2** corresponding to the second wobble shape **112** may be represented by the dotted waveform shown in FIG. **6** (i.e., a waveform, of which the polarity is opposite to that of the second harmonic signal **HM2** corresponding to the first wobble shape **111).**

The optical disk drive **200** further includes a counter section **64** for counting up to a predetermined number of times, an integrating section **31** for detecting and integrating the values of the second harmonic signal **HM2** in a predetermined period and a detecting section **34** for detecting the information represented by the first and second wobble shapes **111** and **112** based on the result of the integration. The integrating section **31** includes a phase corrector **70,** a multiplier **71** and an integrator **72.** The phase corrector 70 corrects the phase of the second harmonic signal **HM2.** The multiplier **71** multiplies together a frequency multiplication signal SS2, supplied from the frequency divider **62,** and the second harmonic signal **HM2.** The integrator **72** integrates the values of the output signal **71a** of the multiplier **71** in a period corresponding to one frame unit and outputs a signal **72a** representing the integrated value to the detecting section **34.**

The detecting section **34** includes a comparator **73** and an address decoder **74.** The comparator **73** digitizes the integrated value, represented by the signal **72a,** with respect to a predetermined threshold value, thereby detecting the information (e.g., "0") represented by the first wobble shape **111** and the information (e.g., "1") represented by the second wobble shape **112.** The address decoder **74** generates an address signal based on the result of digitization done by the comparator **73.**

Each of the frame units **11, 12** and **13** (see FIGS **2A, 2B** and **2C)** includes sixteen portions with the unit wobble shape. Whenever counting sixteen pulses of the synchronous digitized signal **PWBL,** the counter **64** outputs a frame pulse signal **FR.** One pulse interval of the frame pulse signal **FR** corresponds to one frame unit length.

To generate this pulse signal **FR** at a time corresponding to the top of a frame unit, the value of the counter **64** needs to be reset to its initial value at an appropriate timing. By reference to the signal **54a** representing the information **SYNC** that has been supplied from the SYNC detector **54,** the counter **64** sets the initial value. As already described with reference to FIG. **2A,** the LPPs representing the information **SYNC** are concentrated. Consequently, the time corresponding to the top of a frame unit can be detected accurately.

In FIG. **6,** one frame unit is illustrated as having six portions with the unit wobble shape for the sake of simplicity. The counter **64** detects the signal **54a** and sets its count to the initial value "2" synchronously with the output of the signal **54a.** Every time a pulse of the synchronous digitized signal **PWBL** is generated, the counter **64** sequentially increments its count in the order of 2→3→4→5→0 → 1 →..., thus performing a cyclic counting operation. The counter **64** is a so-called "ring counter" that is automatically reset in a frame period. Therefore, even if the LPP signal **43a** has such poor quality that the information **SYNC** can be detected just at a low probability, the counter **64** continues its cyclic counting once its initial value is set and as long as the tracking control is carried on.

Next, the operation of detecting the information represented by the STW shape will be described in further detail.

The frequency divider **62** outputs the synchronous multiplication signal SS2, of which the frequency is twice as high as that of the wobble signal **WBL.** If the multiplier **71** multiplies together the second harmonic signal **HM2,** of which the phase has been corrected by the phase corrector **70,** and the synchronous multiplication signal **71,** then the product will have either a positive value (as indicated by the solid curve) or a negative value (as indicated by the dotted curve) according to the phase polarity of the second harmonic signal **HM2** (i.e., the type of the STW shape).

When the integrator **72** integrates the values of the signal **71a,** representing this product, in a period corresponding to one frame unit, the noise components will have been removed. The comparator **73** has decision levels (threshold values) of "0" and "1" and digitizes the integrated value, thereby detecting the information (e.g., "0") represented by the first wobble shape **111** and the information (e.g., "1") represented by the second wobble shape **112.** The address decoder **74** operates in response to the synchronous digitized signal **PWBL.** Every time the frame pulse signal **FR** is output, the integrator **72** resets its integrated value.

### EMBODIMENT 3

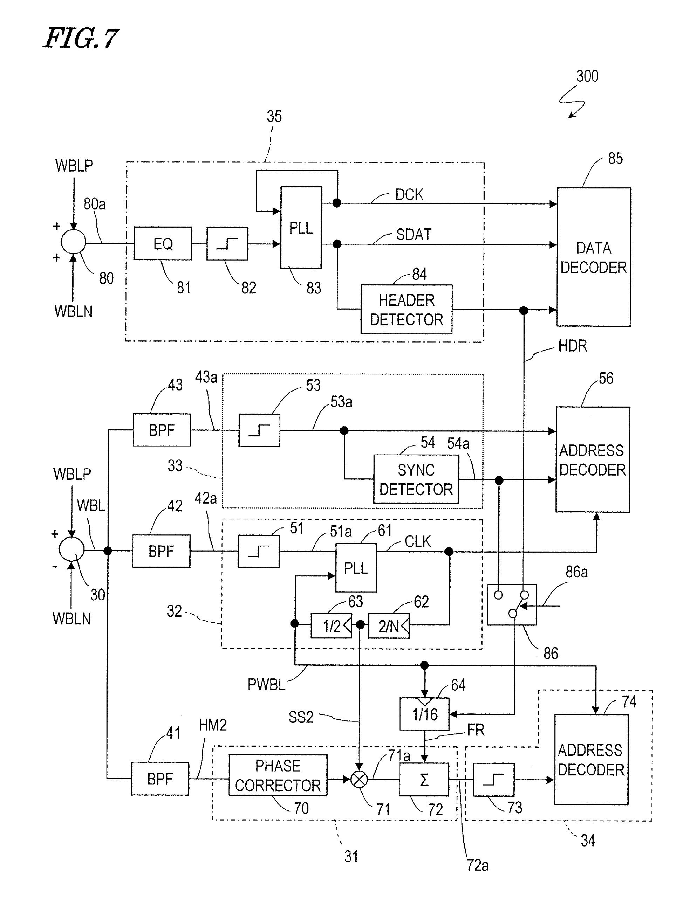

FIG. **7** is a block diagram showing another preferred embodiment of an optical disk drive according to the present invention.

The optical disk drive 300 shown in FIG. 7 includes not only all components of the optical disk drive **200** shown in FIG. 5 but also an adder **80** for adding up the signals **WBLP** and **WBLN** together to generate a read signal, a detecting section 35 for detecting identification information from the read signal, a data decoder **85** for outputting user data, and a selector **86.** The detecting section 35 includes an EQ circuit **81,** a comparator **82,** a PLL **83** and a header detector **84.**

A read signal **80a** is output from the adder **80,** digitized by the comparator **82** and then has its phase locked by the PLL **83.** Thereafter, the read signal **80a** is separated into a clock signal **DCK** and synchronous data **SDAT,** which are output to the data decoder **85** and the header detector **84.**

The header detector **84** detects identification information to identify the top of each block unit 15 from the synchronous data **SDAT,** thereby outputting a header signal **HDR** representing the identification information.

In this preferred embodiment, the initial value of the counter **64** can be set using this header signal **HDR.** The selector **86** selectively outputs either the header signal **HDR** or the output signal **54a** of the SYNC detector **54** to the counter **64.** On receiving either the header signal **HDR** or the signal **54a** from the selector **86,** the counter **64** resets the count to its initial value.

If any data is overwritten on an LPP by mistake to significantly decrease the number of times the information **SYNC** is detected, then the initial value of the counter **64** can be set by using the header signal **HDR** instead of the signal **54a.** The selector **86** may receive a signal **86a** showing whether a track area being scanned by the laser beam is a recorded area or an unrecorded area. If the laser beam is now scanning a recorded area, the selector **86** outputs the header signal **HDR** to the counter **64.** On the other hand, if the laser beam is now scanning an unrecorded area, then the selector **86** outputs the signal **54a** to the counter **64.**

### EMBODIMENT 4

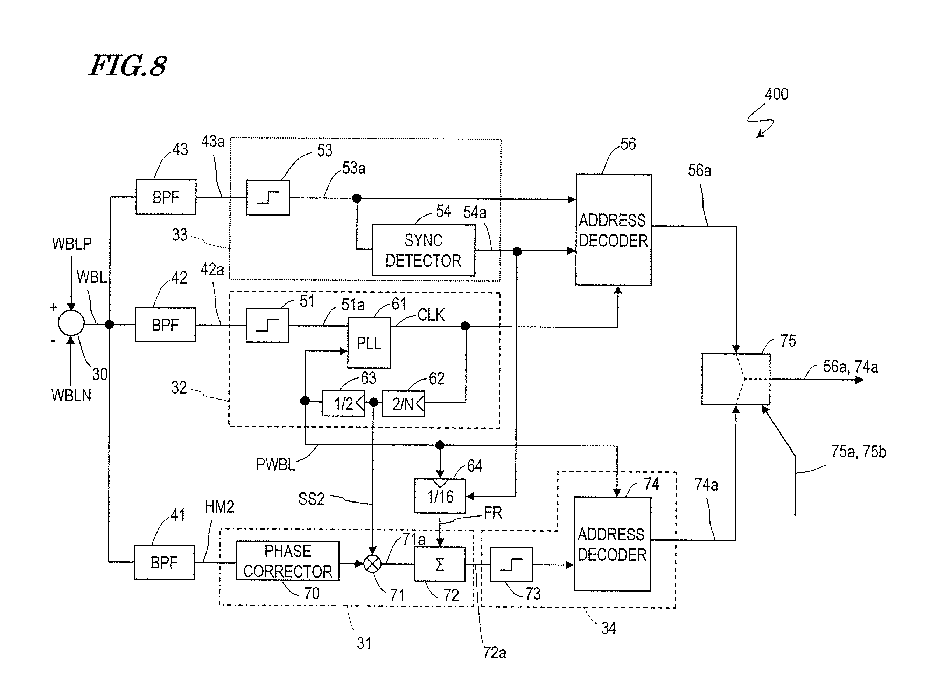

FIG. **8** is a block diagram showing still another preferred embodiment of an optical disk drive according to the present invention.

The optical disk drive **400** shown in FIG. **8** includes not only all components of the optical disk drive **200** shown in FIG. 5 but also a selector **75.**

The address decoder **56** outputs an address signal **56a** to the selector **75** and the address decoder **74** outputs an address signal **74a** to the selector **75.** On receiving a velocity mode switching signal **75a** showing the drive velocity of the optical disk medium **100,** the selector 75 selects one of the two address signals **56a** and **74a** according to the drive velocity of the optical disk medium **100.**

If the optical disk medium **100** is being driven in a high-rate mode and if the laser beam is scanning the track **10** at a linear velocity **V₁,** the selector **75** selectively outputs the address signal **74a.** In other words, the selector **75** selects the information represented by the STW shape, not the information represented by the LPP. On the other hand, if the optical disk medium **100** is being driven in a standard- or low -rate mode and if the laser beam is scanning the track **10** at a linear velocity **V₂** (where V₁ > V₂), the selector **75** selectively outputs the address signal **56a.** In other words, the selector 75 selects the information represented by the LPP, not the information represented by the STW shape.

The frequency band of the second harmonic signal **HM2** is in a relatively low range, while that of the LPP signal **43a** is in a relatively high range. For that reason, while the optical disk medium 100 is being driven at a high velocity, the address signal **74a** generated from the second harmonic signal **HM2** is more reliable than the address signal **56a** generated from the LPP signal **43a.** That is why the selector **75** selects the address signal **74a** in this case. On the other hand, while the optical disk medium 100 is being driven in a standard- or low-rate mode, the address signal **56a** generated from the LPP signal **43a** is reliable, too. Thus, in that case, the address signal **56a** is selected in view of compatibility with another optical disk medium with LPPs but without the STW shape.

As described above, by selectively using one of the address signals **56a** and **74a** according to the drive velocity of the optical disk medium **100,** a highly reliable optical disk drive that seldom generates errors is realized.

Optionally, the selector 75 may select one of the two address signals **56a** and **74a** depending on whether the optical disk drive **400** is now performing a read operation or a write operation. In that case, the selector **75** receives a read/write switching signal **75b** indicating the mode of operation of the optical disk drive **400.** If the optical disk drive **400** is performing a read operation, the selector 75 selectively outputs the address signal **56a.** In other words, the selector **75** selects the information represented by the LPP, not the information represented by the STW shape. On the other hand, if the optical disk drive **400** is performing a write operation, the selector **75** selectively outputs the address signal **74a.** In other words, the selector **75** selects the information represented by the STW shape, not the information represented by the LPP.

During a write operation, the laser beam has a multi-pulse waveform, and therefore, noticeable high-frequency noise is superposed on the signals **WBLP** and **WBLN.** Thus, in that case, the address signal **74a** generated from the second harmonic signal **HM2,** which is less likely to be affected by that high-frequency noise, would be more reliable than the address signal **56a.** For that reason, the selector **75** selectively outputs the address signal **74a.**

Meanwhile, during a read operation, a signal representing user data is superposed as low-frequency noise on the wobble signal **WBL.** Thus, in that case, the address signal **56a** generated from the LPP signal **43a,** which is less likely to be affected by that low-frequency noise, would be more reliable than the address signal **74a.** For that reason, the selector **75** selectively outputs the address signal **56a.**

As described above, by selectively using one of the address signals **56a** and **74a** depending on whether the optical disk drive **400** is performing a read operation or a write operation, a highly reliable optical disk drive that generates even fewer errors is realized.

### EMBODIMENT 5

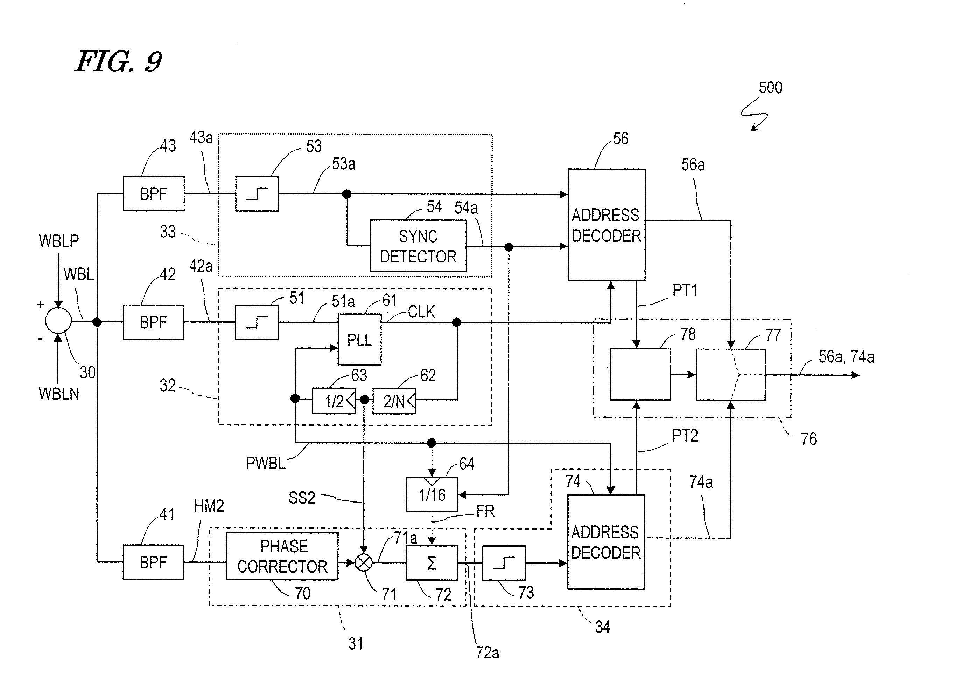

FIG. 9 is a block diagram showing yet another preferred embodiment of an optical disk drive according to the present invention.

The optical disk drive 500 shown in FIG. **9** includes not only all components of the optical disk drive **200** shown in FIG. 5 but also a selector section **76.** The selector section 76 includes a selector **77** and a comparator **78.**

The address decoder **56** outputs the address signal **56a** to the selector **77.** The address decoder **74** also outputs the address signal **74a** to the selector **77.**

In decoding the address information with the digitized signal that has been supplied from the comparator 53, the address decoder 56 detects parity information, thereby determining whether or not the received data is erroneous. When finding the received data erroneous, the address decoder **56** outputs an error detection signal **PT1** to the comparator **78.** In the same way, in decoding the address information with the digitized signal that has been supplied from the comparator **73,** the address decoder **74** detects parity information, thereby determining whether or not the received data is erroneous. When finding the received data erroneous, the address decoder **74** outputs an error detection signal **PT2** to the comparator **78.**

The comparator **78** receives the error detection signals **PT1** and **PT2** and compares an error rate **E₁** in a situation where the address information is detected from the second harmonic signal **HM2** with an error rate **E₂** in a situation where the address information is detected from the LPP signal **43a.** And if the error rate **E₁** is lower than the error rate **E₂,** the comparator **78** controls the selector **77** so as to select the address signal **74a.** Conversely, if the error rate **E₁** is higher than the error rate **E₂,** then the comparator 78 controls the selector **77** so as to select the address signal **56a.** Under the control of the comparator **78,** the selector **77** selectively outputs one of the address signals **56a** and **74a.** It should be noted that if the error rates **E₁** and **E₂** are equal to each other, then it does not matter whether the address signal **56a** or the address signal **74a** is selected.

As already described with reference to FIG. **1A** and FIGS. **2A** through 2C, the LPPs are concentrated around the top of one frame unit but the STW shape is repeatedly formed over one frame unit. That is why if dust has been deposited right over the LPPs, chances are no information could be read from the LPPs. On the other hand, if widespread dirt such as a finger mark has been left on the optical disk medium 100, no information could be read from the STW shape but some information might be readable from the LPPs. In this manner, the error rates **E₁** and **E₂** are changeable with dust, dirt, scratches and so on. By selectively using one of the two address signals **56a** and **74a** depending on the error rate when the address signal is generated, a highly reliable optical disk drive that generates even fewer errors is realized.

### INDUSTRIAL APPLICABILITY

An optical disk medium according to the present invention can have an excellent SN characteristic, and can be used particularly effectively in a write-once or rewritable optical disk medium that is compatible with high-rate read/write operations and in an optical disk medium with a plurality of storage layers (e.g., a high-capacity optical disk media to record high-definition video thereon) among other things.

## Claims

1. An information storage medium comprising
a track that wobbles in a predetermined period and
a plurality of pre-pits, which are arranged adjacent to the track,
wherein the track has a plurality of frame units, at least one of the pre-pits being allocated to each of the frame units, and
wherein each said frame unit has a first wobble shape, of which the falling portion is sloped more steeply than its rising portion, and/or a second wobble shape, of which the rising portion is sloped more steeply than its falling portion, and
wherein the first wobble shape represents a first type of information and the second wobble shape represents a second type of information, and
wherein the first and second types of information are different from each other.

2. The information storage medium of claim 1, wherein each of the frame units has either the first wobble shape or the second wobble shape, and
wherein the at least one pre-pit, allocated to a particular one of the frame units, represents a third type of information that is associated with the first or second type of information represented by the shape of the particular frame unit.

3. The information storage medium of claim 2, wherein the third type of information and the first or second type of information, represented by the shape of the particular frame unit, have the same contents.

4. The information storage medium of claim 1, wherein the at least one pre-pit, allocated to each said frame unit, is adjacent to a prescribed position of its associated frame unit.

5. The information storage medium of claim 1, wherein each of the first and second wobble shapes is a unit shape representing one bit of information, and
wherein each of the frame units has the same number of portions with the unit shape as any of the other frame units.

6. The information storage medium of claim 1, wherein the frame units are grouped into a plurality of word units, each of which includes at least two of the frame units, and
wherein the at least one pre-pit, allocated to the first one of the frame units in each said word unit, provides information showing the top of the word unit.

7. An apparatus for reading and/or writing data from/on the information storage medium of claim 1, the apparatus comprising:
a first signal output section for outputting a first signal, which contains the first and second types of information included in a signal representing a portion of a laser beam that has been radiated toward, and then reflected from, the information storage medium;
a second signal output section for outputting a second signal representing a wobbling frequency of the track, which is included in the signal representing the reflected laser beam; and
a third signal output section for outputting a third signal containing the third type of information represented by the pre-pit, which is included in the signal representing the reflected laser beam.

8. The apparatus of claim 7, further comprising
an integrating section for detecting the values of the first signal at predetermined intervals and finding the integral of those values, and
a first detecting section for detecting the first and second types of information based on the integral.

9. The apparatus of claim 8, wherein each of the first and second wobble shapes is a unit shape representing one bit of information, and
wherein each of the frame units has the same number of portions with the unit shape as any of the other frame units, and
wherein the apparatus further includes a counter section for counting up to a predetermined number of times, and
wherein the predetermined number of times corresponds with the number of the portions with the unit shape that are included in each said frame unit, and
wherein the integrating section resets the integral every time the counter section counts to the predetermined number.

10. The apparatus of claim 9, wherein the frame units are grouped into a plurality of word units, each of which includes at least two of the frame units, and
wherein the third type of information that is represented by the at least one pre-pit, allocated to the first one of the frame units in each said word unit, shows the top of the word unit, and
wherein the apparatus further includes a second detecting section for detecting the third type of information, showing the top of the word unit, based on the third signal, and
wherein when the second detecting section detects the third type of information showing the top of the word unit, the counter section resets its count to an initial value.

11. The apparatus of claim 9, wherein the frame units are grouped into a plurality of word units, each of which includes at least two of the frame units, and
wherein the word units are grouped into a plurality of block units, each of which includes at least two of the word units, and
wherein at a position on the track, corresponding to the top of each said block unit, identification information, showing the top of the block unit, has been recorded, and
wherein the apparatus further includes a third detecting section for detecting the identification information based on a read signal representing the laser beam that has been reflected from the information storage medium, and
wherein when the third detecting section detects the identification information, the counter section resets its count to an initial value.

12. The apparatus of claim 9, wherein the frame units are grouped into a plurality of word units, each of which includes at least two of the frame units, and
wherein the third type of information that is represented by the at least one pre-pit, allocated to the first one of the frame units in each said word unit, shows the top of the word unit, and
wherein the word units are grouped into a plurality of block units, each of which includes at least two of the word units, and
wherein at a position on the track corresponding to the top of each said block unit, identification information, showing the top of the block unit, has been recorded, and
wherein the apparatus further includes:
a second detecting section for detecting the third type of information, showing the top of the word unit, based on the third signal; and
a third detecting section for detecting the identification information based on a read signal representing the laser beam that has been reflected from the information storage medium, and
wherein either when the second detecting section detects the third type of information showing the top of the word unit or when the third detecting section detects the identification information, the counter section resets its count to an initial value.

13. The apparatus of claim 7, wherein each said frame unit has either the first wobble shape or the second wobble shape, and
wherein the third type of information, represented by the at least one pre-pit allocated to a particular one of the frame units, and the first or second type of information, represented by the shape of the particular frame unit, have the same contents, and
wherein the apparatus further includes a selector section for selecting the first and second types of information from the first, second and third types of information if the laser beam is scanning the track at a first velocity but selecting the third type of information from the first, second and third types of information if the laser beam is scanning the track at a second velocity, and
wherein the first velocity is higher than the second velocity.

14. The apparatus of claim 7, wherein each said frame unit has either the first wobble shape or the second wobble shape, and
wherein the third type of information, represented by the at least one pre-pit allocated to a particular one of the frame units, and the first or second type of information, represented by the shape of the particular frame unit, have the same contents, and
wherein the apparatus further includes a selector section for selecting the first and second types of information from the first, second and third types of information while performing a write operation but selecting the third type of information from the first, second and third types of information while performing a read operation.

15. The apparatus of claim 7, further comprising a selector section, which compares a first error rate in a situation where the first and second types of information are detected based on the first signal with a second error rate in a situation where the third type of information is detected based on the third signal and which selects the first and second types of information from the first, second and third types of information if the first error rate is lower than the second error rate but selects the third type of information from the first, second and third types of information if the first error rate is higher than the second error rate.

16. A method for reading and/or writing data from/on the information storage medium of claim 1, the method comprising the steps of:
(i) outputting a first signal, which contains the first and second types of information included in a signal representing a portion of a laser beam that has been radiated toward, and then reflected from, the information storage medium;
(ii) outputting a second signal representing a wobbling frequency of the track, which is included in the signal representing the reflected laser beam; and
(iii) outputting a third signal containing the third type of information represented by the pre-pit, which is included in the signal representing the reflected laser beam.

17. An information storage medium including a plurality of storage layers,
wherein each said storage layer comprises:
a track that wobbles in a predetermined period and
a plurality of pre-pits, which are arranged adjacent to the track,
wherein the track has a plurality of frame units, at least one of the pre-pits being allocated to each of the frame units, and
wherein each said frame unit has a first wobble shape, of which the falling portion is sloped more steeply than its rising portion, and/or a second wobble shape, of which the rising portion is sloped more steeply than its falling portion, and
wherein the first wobble shape represents a first type of information and the second wobble shape represents a second type of information, and
wherein the first and second types of information are different from each other.
